# EUROPÄISCHE PATENTSCHRIFT

(11) **EP 0 670 392 B1**
(45) Veröffentlichungstag und Bekanntmachung des Hinweises auf die Patenterteilung: **12.01.2000**
(21) Anmeldenummer: 95102461.1
(22) Anmeldetag: 22.02.1995
(51) Int. Cl.: E02F 7/10, B63B 27/24, F16L 37/26

(54) **Verfahren und Vorrichtung zum Anschliessen einer Spülrohrleitung an einen Saugbagger**
Method and device for coupling a circulation pipe to a suction dredger
Procédé et dispositif pour le raccordement d'un tuyau de circulation à une drague suceuse

(30) Priorität: 03.03.1994 DE 9403579 U
(43) Veröffentlichungstag der Anmeldung: 06.09.1995
(73) Patentinhaber: Eddelbüttel & Schneider GmbH, 21073 Hamburg (DE)
(72) Erfinder: Brink, Burghard, D-21075 Hamburg (DE)
(74) Vertreter: Liebelt, Rolf, Dipl.-Ing.

(56) Entgegenhaltungen:
- DE-C- 495 580
- GB-A- 969 837
- GB-A- 1 514 713
- NL-A- 8 203 101
- NL-A- 8 900 825

## Beschreibung

Die Erfindung betrifft ein Verfahren und eine Vorrichtung zum Anschließen des üblicherweise schwimmenden Endes einer Spülrohrleitung an die Abförder- oder Druckleitung eines Saugbaggers, insbesondere eines Laderaumsaugbaggers, wobei ein Kupplungsteil am Ende der Spülrohrleitung angehoben sowie mit dem zugehörenden Kupplungsteil am Auslaß der Druckleitung in Eingriff gebracht wird.

Mit Laderaumsaugbaggern wird Erdreich vom Boden eines Gewässers, insbesondere vom Meeresboden in Küstennähe, zu dessen Ufer über größere Entfernung transportiert und dort über eine Leitung zur Gewinnung von zu bebauenden Flächen an Land gespült. Der gefüllte Bagger wird mit der zum Ufer führenden Spülrohrleitung verbunden und nach seinem Entleeren von dieser Leitung gelöst. Hierbei werden Kugelkupplungen verwendet, um die von Strömungs- und Witterungseinflüssen hervorgerufenen Bewegungen des Baggers möglichst nicht auf die Spülrohrleitung zu übertragen.

Das schalenförmige Element dieser Kupplungen ist z. B. am Vorschiff eines solchen Baggers an einer über den Bug hinausragenden Druckleitung mit zur Gewässeroberfläche weisender Kupplungsöffnung angebracht. Zum Herstellen der Leitungsverbindung ist der Saugbagger so zu manövrieren, daß sich diese Kupplungsöffnung möglichst senkrecht über dem kugelförmigen Kupplungsteil am schwimmenden oder freien Ende der Spülrohrleitung befindet, damit das kugelförmige Kupplungsteil mit der daran angeschlossenen Schlauchleitung des Spülrohres durch Anheben in die Kupplungsschale eingeführt und anschließend die Kupplung verriegelt werden kann. Mit einer derartigen, wegen der gewölbten Kupplungsflächen in der Herstellung aufwendigen Kupplung können bezogen auf den Bagger jedoch keine Horizontalkräfte übertragen werden, so daß nicht nur für den Kupplungsvorgang, sondern auch während des Bestehens der Leitungsverbindung dafür Sorge zu tragen ist, daß die am Bagger angreifenden strömungs- und/oder witterungsbedingten Kräfte nicht auf die Kupplung übertragen werden.

Dies ist insbesondere in küstennahen Gewässern bei stürmischem Wetter und rauher See nur mit Hilfe der Schiffsmaschine des Baggers möglich.

Aus der NL-A-8203101 ist ein Saugbagger bekannt, der seitlich neben einer Spülrohrleitung verankert oder festgemacht ist. Zum Anschluß der Spülrohrleitung an die Druckleitung des Saugbaggers wird das Kupplungselement der Spülrohrleitung angehoben und von oben in eine Kupplungstasche an der Druckleitung eingesetzt.

In der GB-A 1 514 713 ist bei einem mit einer Tross an einem Offshore-Terminal festgemachten Tanker das Anschließen einer Förderleitung zwischen Terminal und Tanker an das freie Ende der an einem Ladebaum des Terminals hängenden Förderleitung mit Hilfe einer Leine mit einem Kupplungselement einer Leitung am Tanker in Eingriff gebracht.

Aufgabe der Erfindung ist es nun, das Herstellen einer Verbindung zwischen dem üblicherweise im Wasser schwimmenden Ende einer Spülrohrleitung und der Druckleitung, insbesondere eines Laderaumsaugbaggers, zu erleichtern und hierfür eine kostengünstig zu fertigende Vorrichtung bereitzustellen.

Diese Aufgabe wird gemäß der Erfindung ausgehend von einem Verfahren der eingangs beschriebenen Gattung gemäß Patentanspruch 1 dadurch gelöst, daß zwischen Saugbagger und Spülrohrleitung eine Leinenverbindung geschaffen und durch Einholen der diese Verbindung bildenden Leine zuerst das Kupplungsteil an der Druckleitung über dem Kupplungsteil am Ende der Spülrohrleitung manövriert und anschließend das Kupplungsteil am Ende der Spülrohrleitung in die Kupplungs- bzw. Eingriffsstellung bewegt wird.

Mit der erfindungsgemäß zwischen Saugbagger und dem Ende der Spülrohrleitung herzustellenden Leinenverbindung, auf die eine Hol- oder Zugvorrichtung, z. B. eine Winde des Saugbaggers, einwirkt, wird der Saugbagger und damit das Kupplungsteil an dessen Druckleitung ausschließlich durch Einholen dieser Leine in eine solche Position zum Kupplungsteil am üblicherweise schwimmenden Ende der Spülrohrleitung manövriert, daß zum Herstellen der Leitungsverbindung das Kupplungsteil an der Spülrohrleitung nur noch anzuheben und dabei in Eingriff mit dem Kupplungsteil an der Druckleitung zu bringen ist. Durch diese Maßnahme nach der Erfindung entfallen nicht nur aufwendige Manöver, um den Saugbagger in eine geeignete Position zum Anschluß der Spülrohrleitung zu bringen. Es ist hierdurch auch nicht erforderlich, den Saugbagger während des Entleerens durch zusätzliche Maßnahmen wie Leinenverbindungen zum Ufer oder Grund des Gewässers in Position zu halten, da die während des Entladens am Saugbagger angreifenden strömungs- und witterungsbedingten Kräfte an die Spülrohrleitung abgeleitet werden, die aufgrund ihrer Größe und des Fördermediums so dimensioniert ist, daß sie diese Kräfte ohne die Gefahr von Beschädigungen aufnehmen kann.

Eine Vorrichtung zur Durchführung des erfindungsgemäßen Verfahrens umfaßt eine Leitungskupplung, deren eines Kupplungsteil am Auslaß der Druckleitung eines Saugbaggers vorzugsweise eines Laderaumsaugbaggers über dessen Bordwand, insbesondere dessen Bug, hinausragt und deren anderes Kupplungsteil am als üblicherweise schwimmende Schlauchleitung ausgebildeten Ende einer Spülrohrleitung vorgesehen ist. Diese Vorrichtung ist dadurch gekennzeichnet, daß das Kupplungsteil an der Druckleitung von der an die Bordwand des Saugbaggers angrenzenden ebenen Rückwand, in der die Druckleitung endet, einer Kupplungstasche gebildet wird, deren Vorderwand eine gabenförmige Aussparung aufweist, in die ein Rohrstück, in das die Spülrohrleitung mündet und das eine als Kupplungsteil an der Spülrohrleitung bildende flanschförmige Stütz- oder Führungsplatte aufweist, fluchtend zur Druckleitung mit sich an der Innenfläche der Vorderwand abstützender Führungsplatte einfügbar ist, wobei an einer der gegenüberliegenden Flächen der Kupplungsteile eine nach beendetem Kupplungsvorgang zu aktivierende Dichtung gehalten ist und am Rohrstück außerhalb der Kupplungstasche eine Leine angreift, die durch eine vorzugsweise parallel zur Taschenrückwand höhenverstellbare Öse außerhalb der Kupplungstasche zu einer Winde am Saugbagger geführt ist. Mit dieser erfindungsgemäßen Vorrichtung wird durch das Einholen der Leine mit der Winde zuerst die Kupplungstasche am Saugbagger über die Führungsplatte am Ende der Spülrohrleitung manövriert und anschließend die Führungsplatte in die Kupplungstasche eingeführt.

Diese neue Vorrichtung ermöglicht die Durchführung des Verfahrens nach der Erfindung zum Anschließen einer Spülrohrleitung an einen Saugbagger durch die Anordnung einer Zugleine zwischen Saugbagger und freiem Ende der Spülrohrleitung sowie die Ausgestaltung der Leitungskupplung als in einer Kupplungstasche zwangsgeführten Flanschkupplung trotz möglicherweise während des Kupplungsvorganges zu überwindender erheblicher Horizontalkräfte mit einfachen Mitteln; denn mit der Zugleine wird nicht nur der Saugbagger auch bei ungünstigen Strömungs- und Witterungsverhältnissen in eine Position manövriert, die ein Zusammenfügen der Kupplungsteile ermöglicht. Es werden mit dieser Leine die Kupplungsteile auch in Eingriff gebracht, indem die Stütz- oder Führungsplatte am Rohrstück der Spülrohrleitung in die Kupplungstasche gezogen wird. Dabei wird das Ausrichten des Saugbaggers in die Kupplungsposition durch dessen konvex gekrümmte Bordwand, insbesondere bei einer Anordnung der Kupplungstasche im Bug- oder Heckbereich weiter begünstigt, indem sich das Kupplungsteil der Spülrohrleitung vor dem Einführen in die Kupplungstasche auf einer gewölbten Fläche abstützen kann. Mit der erfindungsgemäßen Leitungskupplung als in einer Kupplungstasche zwangsgeführten Flanschkupplung können sogleich Zugkräfte vom Saugbagger auf die Spülrohrleitung übertragen werden, wodurch der Bagger während des Entleerens nicht mit Halteleinen, z. B. am Ufer des Gewässers, festzumachen ist. Schließlich sind bei der Erfindung wegen der im wesentlichen geraden Leitungsführung im Kupplungsbereich gegenüber den bekannten Kugelkupplungen, die an Bord des Saugbaggers eine schwanenhalsförmig gekrümmte Druckleitung aufweisen, die Druckverluste im Leitungssystem gering.

Bei einer zweckmäßigen Weiterbildung der Erfindung können zur Erleichterung des Einführens des Rohrstückes an der Spülrohrleitung in die Kupplungstasche die Schenkel der gabelförmigen Aussparung in der Vorderwand der Kupplungstasche divergieren. Es ist zu diesem Zweck auch möglich, die Kupplungstasche in Richtung auf die Gewässeroberfläche keilförmig zu erweitern.

Weitere Ausgestaltungen der Erfindung sind in den Unteransprüchen angegeben.

Ein Ausführungsbeispiel der Erfindung wird im folgenden noch an Hand der Zeichnungen beschrieben. Es stellen dar:
- Fig. 1 bis 3:: schematische Ansichten eines Saugbaggers und des schwimmenden Endes einer Spülrohrleitung während des Kupplungsvorganges,
- Fig. 4:: eine schematische Ansicht einer Kupplungstasche,
- Fig. 5:: eine schematische Ansicht der Stützplatte am Rohrstück der Spülrohrleitung,
- Fig. 6:: eine schematische Schnittansicht im vergrößerten Maßstab durch eine Kupplungstasche.

Zwischen dem als Schlauchleitung ausgebildeten und im Wasser schwimmenden Ende einer an die Druckleitung 2 eines Saugbaggers 3 anzuschließenden Spülrohrleitung 1 wird eine Leinenverbindung hergestellt, indem eine von einer Winde 4 des Saugbaggers 3 ausgehende Leine 5 an einem Rohrstück 6 befestigt wird, in welches das freie Ende der Spülrohrleitung 1 mündet. Die von der Winde 4 ausgehende Leine verläuft über eine Umlenkrolle 7 und vor dem Bug des Saugbaggers nach unten durch eine als Rollenführung ausgebildete Öse 8, in der sie in Richtung auf das Rohrstück 6 an der Spülrohrleitung 1 umgelenkt wird. Die Öse 8 ist höhenverstellbar am Ende der Kolbenstange 9 eines Hydraulikzylinders 10 angebracht.

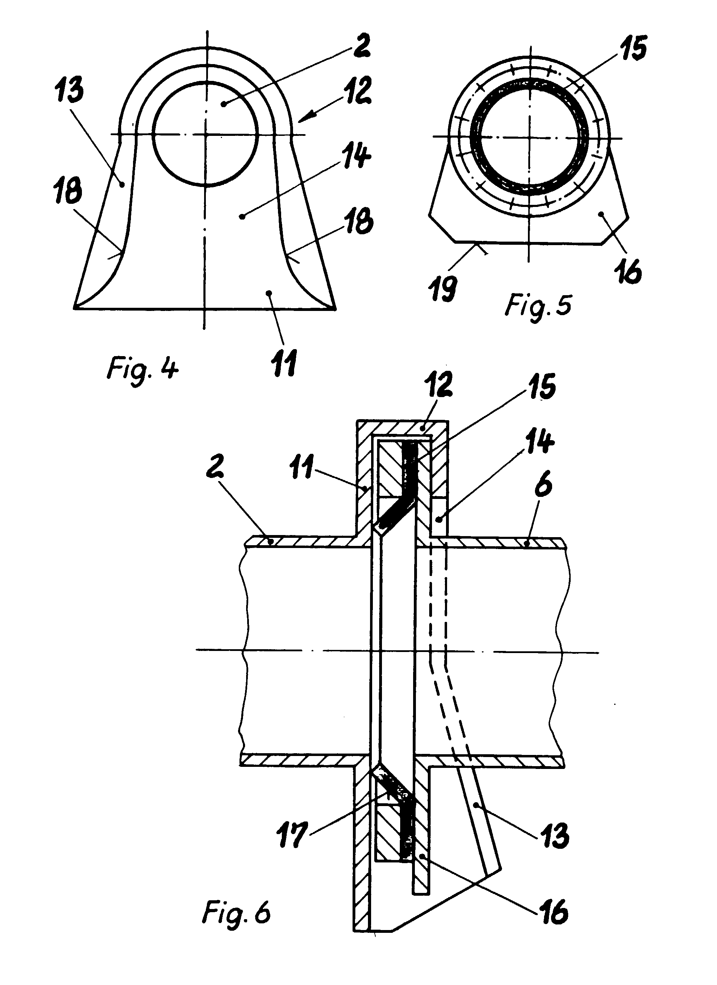

Die Druckleitung 2 endet in der an die Bordwand des Saugbaggers 3 angrenzenden ebenen Rückwand 11 einer Kupplungstasche 12, deren Vorderwand 13 eine gabelförmige Aussparung 14 aufweist, in die das Rohrstück 6 an der Spülrohrleitung 1 einfügbar ist. Das Rohrstück 6 ist mit einer flanschförmigen Stütz- oder Führungsplatte 16 versehen, die das Kupplungsteil an der Spülrohrleitung 1 bildet, sich an der Innenfläche der Vorderwand 13 der Kupplungstasche 12 abstützt und in der Kupplungsstellung das Rohrstück 6 fluchtend zur Mündung der Druckleitung 2 hält. Dabei ist das Kupplungsteil an der Druckleitung 2 in der Rückwand 11 der Kupplungstasche 12 ausgebildet und an der Führungsplatte 16 eine Lippendichtung 15 gehalten (Fig. 6), deren Lippe 17 nach beendetem Kupplungsvorgang bei Druckbeaufschlagung des Leitungssystemes mit der Dichtfläche an der Rückwand 11 der Kupplungstasche 12 dichtend in Eingriff kommt.

Im folgenden wird noch kurz das Zusammenwirken der einzelnen Elemente der beschriebenen Vorrichtung beim Anschließen der Spülrohrleitung an die Druckleitung eines Saugbaggers beschrieben:

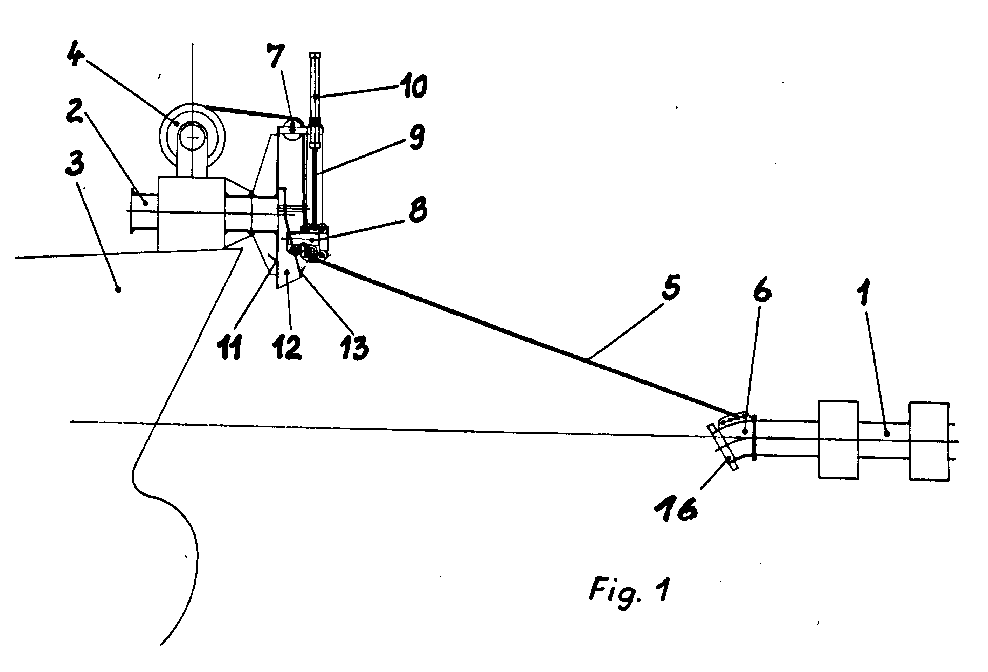

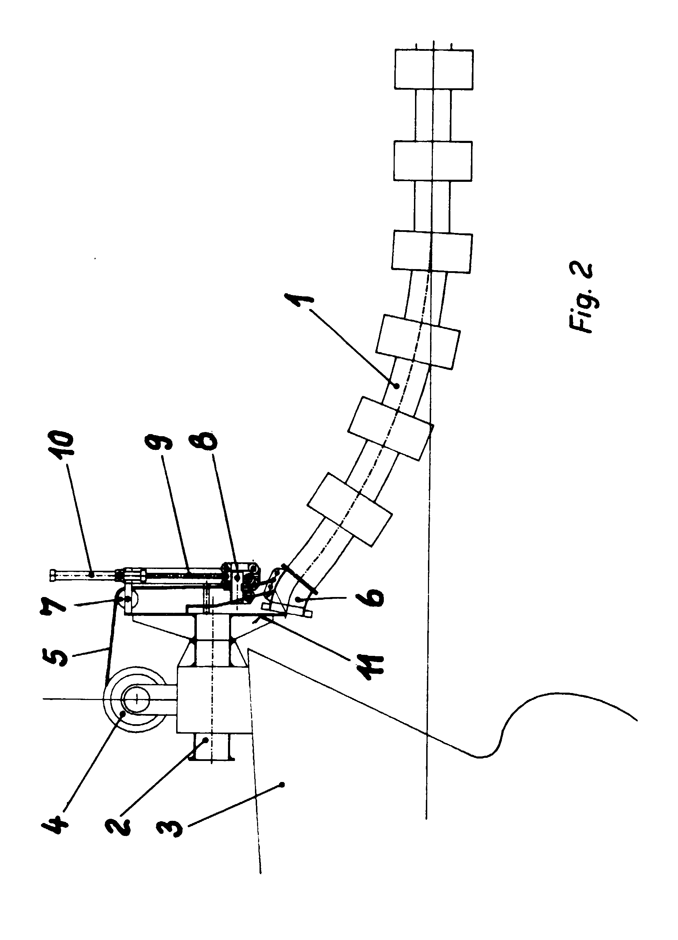

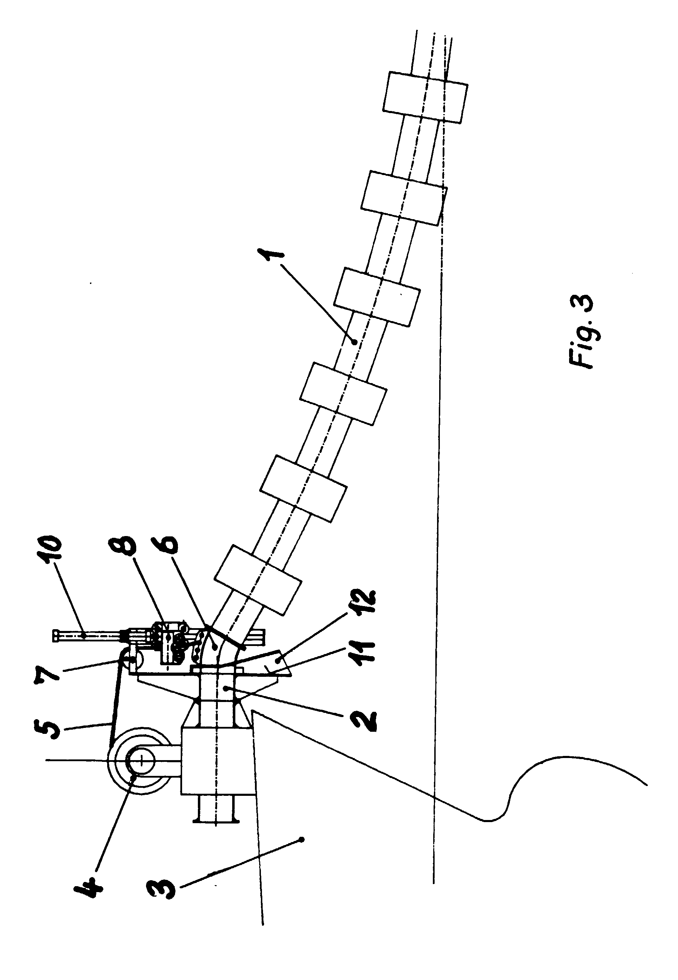

Nach dem Anschlagen der Leine 5 an das Rohrstück 6 am Ende der Spülrohrleitung 1 (Fig. 1) wird die Leine 5 mit der Winde 4 eingeholt, wodurch der Saugbagger 3 in eine Position manövriert wird, in der sich die Führungsplatte 16 am Rohrstück 6 unterhalb der Kupplungstasche 12 befindet (Fig. 2) und das Rohrstück 6 an der Öse 8 anliegt. Aus dieser Position wird die Führungsplatte 16 in die Kupplungstasche 12 (Fig. 3) eingeführt, indem beim weiteren Einholen der Leine 5 die Öse 8 angehoben wird.

Das Einführen der Führungsplatte 16 in die Kupplungstasche 12 und das fluchtende Ausrichten des Rohrstückes 6 in bezug auf die Druckleitung 2 zur Bildung der Leitungsdichtung wird noch dadurch erleichtert, daß die Schenkel 18 der gabelförmigen Aussparung 14 divergieren (Fig. 4), die Vorderwand 13 der Kupplungstasche 12 im unteren Bereich zur Bildung einer keilförmig sich auf die Gewässeroberfläche erweiternden Kupplungstasche 12 von der Rückwand 11 wegweist (Fig. 6) und die Führungsplatte 16 sich in Richtung auf ihren Unterrand 19 verbreitert (Fig. 5).

Zum Lösen der Leitungskupplung ist nach der Druckentlastung des Leitungssystems nur die Leine 5 von der Winde 4 abzuspulen, worauf das Rohrstück 6 aufgrund seines Eigengewichtes aus der Kupplungstasche 12 gleitet.

## Patentansprüche

1. Verfahren zum Anschließen des als üblicherweise schwimmende Schlauchleitung ausgebildeten Endes einer Spülrohrleitung (1) an die Abförder- oder Druckleitung (2) eines Saugbaggers (3), insbesondere eines Laderaumsaugbaggers, indem ein Kupplungsteil am Ende der Spülrohrleitung (1) angehoben und mit dem zugehörenden Kupplungsteil am Auslaß der Druckleitung (2) in Eingriff gebracht wird, dadurch gekennzeichnet, daß zwischen Saugbagger (3) und Spülrohrleitung (1) eine Leinenverbindung geschaffen und durch Einholen der diese Verbindung bildenden Leine (5) zuerst das Kupplungsteil an der Druckleitung (2) über das Kupplungsteil am Ende der Spülrohrleitung (1) manövriert und anschließend das Kupplungsteil am Ende der Spülrohrleitung (1) in die Kupplungsstellung bewegt wird.

2. Vorrichtung zur Durchführung des Verfahrens nach Anspruch 1, die eine Leitungskupplung umfaßt, deren eines Kupplungsteil am Auslaß der Druckleitung (2) eines Saugbaggers (3), vorzugsweise eines Laderaumbaggers, über dessen Bordwand, insbesondere dessen Bug, hinausragt und deren anderes Kupplungsteil am als üblicherweise schwimmende Schlauchleitung ausgebildeten Ende einer Spülrohrleitung (1) vorgesehen ist, dadurch gekennzeichnet, daß das Kupplungsteil an der Druckleitung (2) von der an die Bordwand des Saugbaggers (3) angrenzenden ebenen Rückwand (11), in der die Druckleitung (2) endet, einer Kupplungstasche (12) gebildet wird, deren Vorderwand (13) eine gabelförmige Aussparung (14) aufweist, in die ein Rohrstück (6), in das die Spülrohrleitung (1) mündet und das eine das Kupplungsteil an der Spülrohrleitung (1) bildende flanschförmige Stütz- oder Führungsplatte (16) aufweist, fluchtend zur Druckleitung (2) mit sich an der Innenfläche der Vorderwand (13) abstützender Führungsplatte (16) einfügbar ist, wobei an einer der gegenüberliegenden Flächen der Kupplungsteile eine nach beendetem Kupplungsvorgang zu aktivierende Dichtung (15) gehalten ist und am Rohrstück (6) außerhalb der Kupplungstasche (12) eine Leine (5) angreift, die durch eine höhenverstellbare Öse (8) zu einer Winde (4) am Saugbagger (3) geführt ist, wobei durch das Einholen der Leine (5) mit der Winde (4) zuerst die Kupplungstasche (12) über die Führungsplatte (16) manövriert und anschließend die Führungsplatte (16) in die Kupplungstasche (12) eingeführt wird.

3. Vorrichtung nach Anspruch 2, dadurch gekennzeichnet, daß die Öse (8) parallel zur Taschenrückwand (11) höhenverstellbar ist.

4. Vorrichtung nach Anspruch 2 oder 3, dadurch gekennzeichnet, daß die Öse (8) außerhalb der Kupplungstasche (12) vorgesehen ist.

5. Vorrichtung nach einem der Ansprüche 2 bis 4, dadurch gekennzeichnet, daß die Dichtung (15) als selbstaktivierende Lippendichtung ausgebildet ist.

6. Vorrichtung nach einem der Ansprüche 2 bis 5, dadurch gekennzeichnet, daß die Öse (8) von einer Rollenführung gebildet wird.

7. Vorrichtung nach einem der Ansprüche 2 bis 6, dadurch gekennzeichnet, daß die Öse (8) an der Kolbenstange (9) eines Hydraulikzylinders (10) gehalten ist.

8. Vorrichtung nach einem der Ansprüche 2 bis 7, dadurch gekennzeichnet, daß das Rohrstück (6) an der Spülrohrleitung (1) als Rohrkrümmer ausgebildet ist.

9. Vorrichtung nach einem der Ansprüche 2 bis 8, dadurch gekennzeichnet, daß die Schenkel (18) der gabelförmigen Aussparung (14) in der Vorderwand (13) der Kupplungstasche (12) divergieren.

10. Vorrichtung nach einem der Ansprüche 2 bis 9, dadurch gekennzeichnet, daß die Kupplungstasche (12) sich in Richtung auf die Gewässeroberfläche keilförmig erweitert.

## Claims

1. Method for attaching the end of a circulation pipe (1), designed as a normally floating hose, to the delivery or pressure pipe (2) of a suction dredger (3), in particular a cargo space suction dredger, in that a coupling part at the end of the circulation pipe (1) is raised and is brought into engagement with the associated coupling part at the outlet of the pressure pipe (2), characterised in that a line connection is created between suction dredger (3) and circulation pipe (1) and, by hauling in of the line (5) forming this connection, first the coupling part on the pressure pipe (2) is manoeuvred over the coupling part at the end of the circulation pipe (1) and then the coupling part at the end of the circulation pipe (1) is moved into the coupling position.

2. Device for carrying out the process according to claim 1, which comprises a pipe coupling of which one coupling part projects at the outlet of the pressure pipe (2) of a suction dredger (3), preferably a cargo space dredger, beyond the side thereof, in particular the bow thereof, and of which the other coupling part is provided on the end of a circulation pipe (1) designed as a normally floating hose, characterised in that the coupling part on the pressure pipe (2) is formed by the plane back wall (11), which adjoins the side of the suction dredger (3) and in which the pressure pipe (2) ends, of a coupling pocket (12) of which the front wall (13) has a fork-shaped recess (14) into which there can be inserted a length of pipe (6) into which the circulation pipe (1) opens and which comprises a flange-shaped supporting or guide plate (16) forming the coupling part on the circulation pipe (1), in alignment with the pressure pipe (2) with a guide plate (16) resting on the internal face of the front wall (13), wherein a seal (15) which is to be activated on completion of the coupling process is held on one of the opposing faces of the coupling parts and a line (5) which is guided through a height-adjustable eyelet (8) to a winch (4) on the suction dredger (3) acts on the length of pipe (6) outside the coupling pocket (12), wherein the coupling pocket (12) is first manoeuvred over the guide plate (16) by the hauling in of the line (5) with the winch (4) and the guide plate (16) is then introduced into the coupling pocket (12).

3. Device according to claim 2, characterised in that the eyelet (8) is adjustable in height parallel to the back wall of the pocket (11).

4. Device according to claim 2 or 3, characterised in that the eyelet (8) is provided outside the coupling pocket (12).

5. Device according to one of claims 2 to 4, characterised in that the seal (15) is designed as a self-activating lip seal.

6. Device according to one of claims 2 to 5, characterised in that the eyelet (8) is formed by a roller guide.

7. Device according to one of claims 2 to 6, characterised in that the eyelet (8) is held on the piston rod (9) of a hydraulic cylinder (10).

8. Device according to one of claims 2 to 7, characterised in that the length of pipe (6) is designed as an elbow on the circulation pipe (1).

9. Device according to one of claims 2 to 8, characterised in that the arms (18) of the fork-shaped recess (14) diverge in the front wall (13) of the coupling pocket (12).

10. Device according to one of claims 2 to 9, characterised in that coupling pocket (12) widens in the form of a wedge in the direction of the surface of the water.

## Revendications

1. Procédé pour raccorder l'extrémité, se présentant sous la forme d'une conduite en tuyau souple habituellement flottante, d'une conduite de remblayage (1) à la conduite sous pression ou de refoulement (2) d'une drague suceuse (3), en particulier d'une drague suceuse porteuse, consistant à soulever une pièce d'accouplement à l'extrémité de la conduite de remblayage (1) et à l'engager avec une pièce d'accouplement associée en sortie de la conduite sous pression (2), caractérisé en ce que, entre la drague suceuse (3) et la conduite de remblayage (1), on réalise un raccordement par cordage et, en hâlant le cordage (5) constituant ce raccordement, on manoeuvre tout d'abord la pièce d'accouplement de la conduite sous pression (2) par dessus la pièce d'accouplement qui est à l'extrémité de la conduite de remblayage (1), puis on amène la pièce d'accouplement qui est à l'extrémité de la conduite de remblayage (1) dans la position d'accouplement.

2. Dispositif pour mettre en oeuvre le procédé selon la revendication 1 relatif à un accouplement de conduites, dans lequel une pièce d'accouplement en sortie de la conduite sous pression (2) d'une drague suceuse (3), de préférence une drague suceuse porteuse, déborde de la drague, en particulier de la proue de celle-ci, et dans lequel une autre pièce d'accouplement est agencée à l'extrémité, se présentant sous la forme d'une conduite en tuyau souple habituellement flottante, d'une conduite de remblayage (1), caractérisé en ce que la pièce d'accouplement de la conduite sous pression (2) est formée par la paroi arrière plane (11) d'une poche d'accouplement (12), ladite paroi arrière plane où aboutit la conduite sous pression (2) étant proche du bord de la drague suceuse (3), et en ce que la paroi avant (13) de ladite poche d'accouplement comporte un évidement fourchu (14) dans lequel une pièce tubulaire (6), abouchant la conduite de remblayage (1) et comportant une plaque de guidage ou d'appui (16) en forme de bride et constituant la pièce d'accouplement de la conduite de remblayage (1), peut s'encastrer en alignement avec la conduite sous pression (2), la plaque de guidage (16) s'appuyant sur la surface intérieure de la paroi avant (13), un joint (15) actif à la fin du processus d'accouplement étant maintenu contre une des surfaces opposées de la pièce d'accouplement et un cordage (5) s'engageant avec la partie tubulaire (6) à l'extérieur de la poche d'accouplement (12), lequel cordage est mené à travers un anneau réglable en hauteur (8) jusqu'à un treuil (4) prévu à bord de la drague suceuse (3), d'où il résulte que, en hâlant le cordage (5) avec le treuil (4), on manoeuvre tout d'abord la poche d'accouplement (12) par dessus la plaque de guidage (16), puis on introduit la plaque de guidage (16) dans la poche d'accouplement (12).

3. Dispositif selon la revendication 2, caractérisé en ce que l'anneau (8) est réglable en hauteur parallèlement à la paroi arrière (11) de la poche.

4. Dispositif selon la revendication 2 ou 3, caractérisé en ce que l'anneau (8) est agencé à l'extérieur de la poche d'accouplement (12).

5. Dispositif selon l'une des revendications 2 à 4, caractérisé en ce que le joint (15) se présente sous la forme d'un joint à lèvre dynamique.

6. Dispositif selon l'une des revendications 2 à 5, caractérisé en ce que l'anneau (8) est formé par un dispositif de guidage à rouleaux.

7. Dispositif selon l'une des revendications 2 à 6, caractérisé en ce que l'anneau (8) est maintenu sur la tige de piston (9) d'un vérin hydraulique (10).

8. Dispositif selon l'une des revendications 2 à 7, caractérisé en ce que la pièce tubulaire (6) associée à la conduite de remblayage (1) se présente sous la forme d'un tuyau coudé.

9. Dispositif selon l'une des revendications 2 à 8, caractérisé en ce que les côtés (18) de l'évidement bifurqué (14) ménagé dans la paroi avant (13) de la poche d'accouplement (12) divergent.

10. Dispositif selon l'une des revendications 2 à 9, caractérisé en ce que la poche d'accouplement (12) s'élargit en forme de coin dans la direction de la surface des eaux.
